# EUROPEAN PATENT SPECIFICATION

(11) **EP 4 187 973 B1**
(45) Date of publication and mention of the grant of the patent: **27.08.2025**
(21) Application number: 22210294.9
(22) Date of filing: 29.11.2022
(51) Int. Cl.: H04W 36/00, H04W 36/08, H04W 84/12

(54) **TERMINAL ROAMING METHOD, APPARATUS, AND WIRELESS LOCAL AREA NETWORK**
ENDGERÄTEROAMINGVERFAHREN, VORRICHTUNG UND DRAHTLOSES LOKALES NETZWERK
PROCÉDÉ D'ITINÉRANCE DE TERMINAL, APPAREIL ET RÉSEAU LOCAL SANS FIL

(30) Priority: 29.11.2021 CN 202111432187
(43) Date of publication of application: 31.05.2023
(73) Proprietor: Huawei Technologies Co., Ltd., Longgang District, Shenzhen, Guangdong 518129 (CN)
(72) Inventor: ZHANG, Shuaishuai, Shenzhen, 518129 (CN); DING, Baokun, Shenzhen, 518129 (CN); PAN, Chun, Shenzhen, 518129 (CN); HE, Xiangyu, Shenzhen, 518129 (CN); WU, Rihai, Shenzhen, 518129 (CN); CHEN, Liangliang, Shenzhen, 518129 (CN)
(74) Representative: Gill Jennings & Every LLP

(56) References cited:
- EP-A1- 3 876 571
- US-A1- 2007 060 127
- US-A1- 2012 315 899

## Description

### TECHNICAL FIELD

This application pertains to the field of wireless local area network (wireless local area network, WLAN) technologies, and in particular, relates to a terminal roaming method, an apparatus, and a wireless local area network.

### BACKGROUND

A WLAN includes an access point (access point, AP) and a station (station, STA). The STA refers to a terminal with a WLAN function, for example, a smartphone or a laptop. In a moving process of a terminal in the WLAN, link quality decreases with an increase in a distance between the terminal and an associated AP or decreases due to an obstacle. In this case, the terminal can roam to an AP that provides a higher-quality link to meet service requirements on communication quality. In a roaming handover process of the terminal, service transmission is affected to some extent. Therefore, how to enable the terminal to smoothly perform roaming handover is a problem that needs to be resolved currently.

US2012315899A1 relates to device roaming in hybrid Wi-Fi/wireline and multi-AP networks. EP3876571A1 relates to fast secure handover.

### SUMMARY

This application provides a terminal roaming method, an apparatus, and a wireless local area network, to improve smoothness of roaming handover of a terminal.

The invention has been defined in the independent claims. Further specific technical features have been defined in the dependent claims.

According to a first aspect, a terminal roaming method is provided, and is applied to a wireless local area network. The method includes: A first AP receives first session migration information, where the first session migration information includes a session parameter used when a first terminal performs data exchange (exchange) with a second AP, and the second AP is an original associated AP of the first terminal. After the first terminal is associated with the first AP, the first AP continues data exchange with the first terminal based on the session parameter used when the first terminal performs data exchange with the second AP. A session parameter in this application is a parameter related to a session between a terminal and an AP, and is not a parameter of another type, for example, a security parameter. Therefore, a key (such as a pairwise master key (pairwise master key, PMK)) are not a session parameter. For example, the session parameter may be a block acknowledgment (block acknowledgment, BA) session parameter, a target wake time (target wake time, TWT) session parameter, or the like.

In this application, the session parameter used when the terminal performs data exchange with the original associated AP is migrated to a roaming target AP. After the terminal is associated with the roaming target AP, the roaming target AP can continue data exchange with the terminal based on the migrated session parameter. The terminal and the roaming target AP do not need to perform session negotiation again, to shorten a data service recovery time required after a roaming handover of the terminal, and reduce a service transmission delay. This improves smoothness of roaming handover of the terminal.

In the first aspect, the first AP receives the first session migration information includes: The first AP receives the first session migration information from the first terminal. That is, the terminal sends the session migration information to the roaming target AP.

Optionally, the first session migration information is in an authentication request and/or an association request. The authentication request may be specifically an authentication request frame, and the association request may be specifically an association request frame or a re-association request frame.

Optionally, that the first session migration information is in the authentication request and/or the association request may be understood as that the authentication request includes session parameters corresponding to one or more service priorities and/or session parameters corresponding to one or more service flows; or the association request includes session parameters corresponding to one or more service priorities and/or session parameters corresponding to one or more service flows; or the authentication request includes session parameters corresponding to one or more service priorities and/or session parameters corresponding to one or more service flows, and the association request also includes session parameters corresponding to one or more service priorities and/or session parameters corresponding to one or more service flows. For example, a session parameter corresponding to a service priority may be a session parameter corresponding to a BA session. A session parameter corresponding to a service flow may be a session parameter corresponding to a TWT session.

Before being associated with the roaming target AP, the terminal may send, to the roaming target AP by using the authentication request and/or the association request, a session parameter corresponding to one session at a time or send session parameters corresponding to a plurality of sessions at a time. In this way, after the terminal is associated with the roaming target AP, the roaming target AP can continue data exchange of a corresponding session with the terminal based on the migrated session parameter, the terminal and the roaming target AP do not need to perform session negotiation again, and the terminal can quickly resume service transmission, to reduce a service transmission delay.

Alternatively, the first session migration information is in a session migration frame sent by the first terminal after the first terminal is associated with the first AP, and the session migration frame includes session parameters corresponding to a plurality of service priorities and/or session parameters corresponding to a plurality of service flows.

After being associated with the roaming target AP, the terminal may send, to the roaming target AP by using one or more session migration frames, a session parameter used when the terminal performs data exchange with the original associated AP. When the terminal or the roaming target AP has a service transmission requirement, data exchange can be performed based on the session parameter used when the terminal performs the data exchange with the original associated AP. In this way, the terminal and the roaming target AP do not need to perform session negotiation again, and service transmission can be quickly resumed, to reduce a service transmission delay. In addition, because the session migration frame includes the session parameters corresponding to a plurality of service priorities and/or the session parameters corresponding to a plurality of service flows, that is, the terminal can send, to the roaming target AP by using one session migration frame, session parameters corresponding to a plurality of sessions. Compared with a current solution in which only a session parameter corresponding to one session can be transmitted through negotiation at a time, in this implementation of this application, a quantity of times of transmitting the session parameters through an air interface is reduced, so that air interface resources occupied for transmitting the session parameters are reduced, saving air interface resources.

Alternatively, the first session migration information is in at least one of an authentication request, an association request, or a session migration frame sent by the first terminal after the first terminal is associated with the first AP. That is, before being associated with the roaming target AP, the terminal may send all session parameters in the first session migration information to the roaming target AP by using the authentication request and/or the association request. Alternatively, after being associated with the roaming target AP, the terminal may send all session parameters in the first session migration information to the roaming target AP by using the session migration frame. Alternatively, before being associated with the roaming target AP, the terminal sends some of session parameters in the first session migration information to the roaming target AP by using the authentication request and/or the association request. After being associated with the roaming target AP, the terminal sends the other session parameters in the first session migration information to the roaming target AP by using the session migration frame.

Optionally, the first session migration information includes a BA session parameter and/or a TWT session parameter.

Optionally, the first AP and the second AP have a same device series. That the device series are the same includes that, for example, device name prefixes are the same, device functions are similar, or device vendors are the same. Two APs of a same device series have a same device model or different device models. A plurality of APs of a same device series are deployed in the WLAN, to ensure that communication functions of the plurality of APs are the same or similar as much as possible, so that a success rate of session parameter migration can be improved, so as to improve feasibility of the solutions of this application.

Optionally, the first AP receives a frame from a second terminal associated with the first AP, where the frame includes an identifier of a third AP, and the frame indicates that the second terminal is to roam to the third AP. The first AP sends second session migration information to the third AP, where the second session migration information includes a session parameter used when the second terminal performs data exchange with the first AP.

According to a second aspect, a terminal roaming method is provided, and is applied to a wireless local area network. The method includes: A terminal sends session migration information to a roaming target AP, where the session migration information includes a session parameter used when the terminal performs data exchange with an original associated AP of the terminal.

In this application, the terminal sends the session migration information to the roaming target AP. After the terminal is associated with the roaming target AP, the roaming target AP can continue the data exchange with the terminal based on the migrated session parameter, and the terminal can also continue data exchange with the roaming target AP based on the session parameter used when the terminal performs data exchange with the original associated AP. The terminal and the roaming target AP do not need to perform session negotiation again, to shorten a data service recovery time required after a roaming handover of the terminal, and reduce a service transmission delay. This improves smoothness of roaming handover of the terminal.

Optionally, the session migration information is in an authentication request and/or an association request.

Before being associated with the roaming target AP, the terminal may send, to the roaming target AP by using the authentication request and/or the association request, a session parameter corresponding to one session at a time or send session parameters corresponding to a plurality of sessions at a time. In this way, after the terminal is associated with the roaming target AP, the roaming target AP can continue data exchange of a corresponding session with the terminal based on the migrated session parameter, the terminal and the roaming target AP do not need to perform session negotiation again, and the terminal can quickly resume service transmission, to reduce a service transmission delay.

Alternatively, the session migration information is in a session migration frame sent by the terminal after the terminal is associated with the roaming target AP, and the session migration frame includes session parameters corresponding to a plurality of service priorities and/or session parameters corresponding to a plurality of service flows.

After being associated with the roaming target AP, the terminal may send, to the roaming target AP by using one or more session migration frames, a session parameter used when the terminal performs data exchange with the original associated AP. When the terminal or the roaming target AP has a service transmission requirement, data exchange can be performed based on the session parameter used when the terminal performs the data exchange with the original associated AP. In this way, the terminal and the roaming target AP do not need to perform session negotiation again, and service transmission can be quickly resumed, to reduce a service transmission delay. In addition, because the session migration frame includes the session parameters corresponding to a plurality of service priorities and/or the session parameters corresponding to a plurality of service flows, that is, the terminal can send, to the roaming target AP by using one session migration frame, session parameters corresponding to a plurality of sessions. Compared with a current solution in which only a session parameter corresponding to one session can be transmitted through negotiation at a time, in this implementation of this application, a quantity of times of transmitting the session parameters through an air interface is reduced, so that air interface resources occupied for transmitting the session parameters are reduced, saving air interface resources.

Optionally, the session migration information includes a BA session parameter and/or a TWT session parameter.

Optionally, after the terminal is associated with the roaming target AP, the terminal continues the data exchange with the roaming target AP based on the session parameter used when the terminal performs data exchange with the original associated AP.

According to a third aspect, an AP is provided. The AP includes a plurality of functional modules. The plurality of functional modules interact with each other to implement the method according to the first aspect and the implementations of the first aspect. The plurality of functional modules may be implemented based on software, hardware, or a combination of software and hardware, and the plurality of functional modules may be randomly combined or divided based on a specific implementation.

According to a fourth aspect, a terminal is provided. The terminal includes a plurality of function modules, and the plurality of function modules interact with each other to implement the method according to the method according to the second aspect and the implementations of the second aspect. The plurality of functional modules may be implemented based on software, hardware, or a combination of software and hardware, and the plurality of functional modules may be randomly combined or divided based on a specific implementation.

According to a fifth aspect, a wireless local area network is provided, including a terminal and a plurality of APs. The terminal is configured to perform the method according to the second aspect and the implementations of the second aspect or the method according to the third aspect and the implementations of the third aspect, and the AP is configured to perform the method according to the first aspect and the implementations of the first aspect.

According to a fifth aspect, a computer program product is provided, including a computer program. When the computer program is executed by a processor of an access point, the method according to the first aspect and the implementations of the first aspect is implemented; or when the computer program is executed by a processor of a terminal, the method according to the second aspect and the implementations of the second aspect or the method according to the second aspect and the implementations of the second aspect is implemented.

### BRIEF DESCRIPTION OF DRAWINGS

FIG. 1 is a schematic diagram of a structure of a WLAN according to an implementation of this application;
FIG. 2 is a schematic flowchart of a terminal roaming method according to an implementation of this application;
FIG. 3 is a schematic diagram of a structure of a frame element according to an implementation of this application;
FIG. 4 is a schematic diagram of a structure of a BA migration element according to an implementation of this application;
FIG. 5 is a schematic diagram of a structure of a TWT migration element according to an implementation of this application;
FIG. 6 is a schematic flowchart of another terminal roaming method according to the embodiments of the invention;
FIG. 7 is a schematic diagram of a structure of another TWT migration element according to an implementation of this application;
FIG. 8 is a schematic flowchart of still another terminal roaming method according to the embodiments of the invention;
FIG. 9 is a schematic flowchart of yet another terminal roaming method according to an implementation of this application;
FIG. 10 is a schematic flowchart of yet still another terminal roaming method according to the embodiments of the invention;
FIG. 11 is a schematic diagram of a structure of a first AP in a wireless local area network according to an implementation of this application;
FIG. 12 is a schematic diagram of a structure of another first AP in a wireless local area network according to an implementation of this application;
FIG. 13 is a schematic diagram of a structure of a terminal in a wireless local area network according to an implementation of this application;
FIG. 14 is a schematic diagram of a structure of another terminal in a wireless local area network according to an implementation of this application;
FIG. 15 is a schematic diagram of a structure of still another terminal in a wireless local area network according to an implementation of this application;
FIG. 16 is a block diagram of an AP according to an implementation of this application; and
FIG. 17 is a block diagram of a terminal according to an implementation of this application.

### DESCRIPTION OF IMPLEMENTATIONS

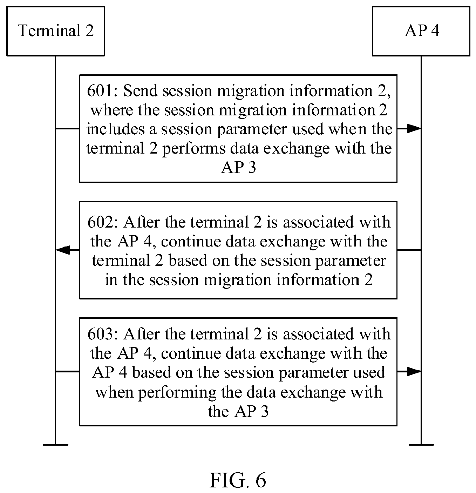

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those that comprise at least all the features of an independent claim. In the following, the embodiments of the invention are described with particular reference to Figs. 6, 8 and 12. The other embodiments, implementations and/or examples of the disclosure are provided for illustrative purposes to support a better understanding of the invention.

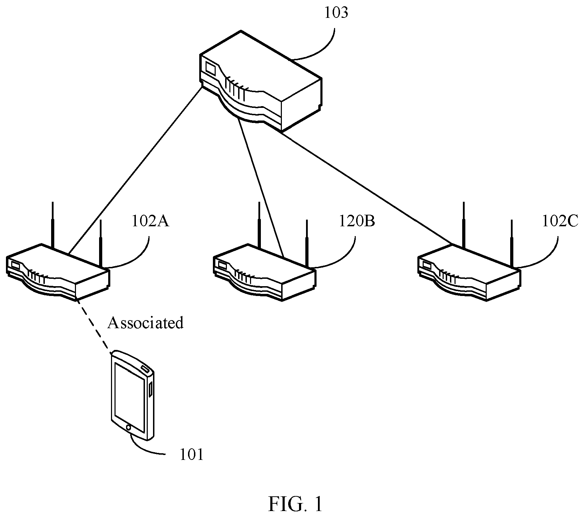

The technical solutions of this application are applied to a WLAN. For example, FIG. 1 is a schematic diagram of a structure of a WLAN according to an implementation of this application. As shown in FIG. 1, the WLAN includes a terminal 101 and a plurality of APs 102A to 102C (collectively referred to as APs 102). The AP 102 is used to provide a bridge function between the WLAN and another type of network (for example, a wired network). Quantities of terminals and APs in the figure are merely used as examples for description, and are not intended to limit the WLAN provided in this implementation of this application.

The terminal 101 is configured with a WLAN function. For example, the terminal 101 may be a smartphone, a notebook computer, an internet of things (internet of things, IoT) device, an automated optical inspection (automated optical inspection, AOI) device, an intelligent wearable device, or the like that has a WLAN chip. The AP 102 is a network device having a WLAN chip or a WLAN system on a chip (system on a chip, SoC). For example, the AP 102 may be a router, a switch, or the like. The AP 102 is configured to provide a WLAN protocol-based wireless access service for the terminal 101.

Optionally, the plurality of APs 102 are communicatively connected to each other. For example, refer to FIG. 1. The WLAN further includes a wireless controller 103. The plurality of APs 102 are connected to each other through the wireless controller 103. The wireless controller 103 is configured to manage the APs 102 in a centralized manner, including performing radio frequency calibration, air interface optimization, security authentication, and the like on the APs 102. The wireless controller may be, for example, an access controller (access controller, AC). Alternatively, the WLAN may not include a wireless controller. For example, the AP 102 may directly access another type of network.

In a moving process of a terminal in the WLAN, link quality decreases with an increase in a distance between the terminal and an associated AP and/or decreases due to an obstacle. In this case, the terminal can roam to an AP that provides a higher-quality link to meet service requirements on communication quality. For example, in a WLAN shown in FIG. 1, a terminal 101 is associated with an AP 102A (a dashed line between the terminal 101 and the AP 102A in the figure represents only an association). In a process in which the terminal 101 moves toward an AP 102B, quality of a link between the terminal 101 and the AP 102A deteriorates. In this case, the terminal 101 may roam to the AP 102B.

A roaming process of the terminal in the WLAN includes: The terminal first breaks an old link between the terminal and an original associated AP, and then establishes a new link between the terminal and a roaming target AP. A process of establishing the new link between the terminal and the roaming target AP includes link authentication, association, and key agreement. The terminal and the AP usually perform data exchange based on a BA session mechanism, a TWT session mechanism, or the like. Currently, after roaming is completed, a terminal needs to re-perform BA session negotiation, TWT session negotiation, and the like with a new associated AP. Each time session negotiation is performed takes a specific period of time, which increases a service transmission delay.

In view of this, this application proposes a technical solution of migrating a session parameter used when a terminal performs data exchange with an original associated AP to a roaming target AP. After the terminal is associated with the roaming target AP, the roaming target AP can continue data exchange with the terminal based on the migrated session parameter, and the terminal can also continue data exchange with the roaming target AP based on the session parameter used when the terminal performs data exchange with the original associated AP. The terminal and the roaming target AP do not need to perform session negotiation again, to shorten a data service recovery time required after a roaming handover of the terminal, and reduce a service transmission delay. This improves smoothness of roaming handover of the terminal.

A session parameter in this application is a parameter related to a session between a terminal and an AP, and is not a parameter of another type, for example, a security parameter. Therefore, a key (such as a PMK) is not a session parameter. For example, the session parameter may be a BA session parameter, a TWT session parameter, or the like.

This application provides two implementations based on an inventive concept of migrating a session parameter used when a terminal performs data exchange with an original associated AP to a roaming target AP. In an implementation, before roaming, the terminal indicates an associated AP of the terminal to send session migration information to the roaming target AP. In another implementation, in a roaming process or after roaming of the terminal is completed, the terminal sends session migration information to the roaming target AP. The session migration information includes the session parameter used when the terminal performs data exchange with the original associated AP. In this application, the two implementations are separately described by using the following two implementations.

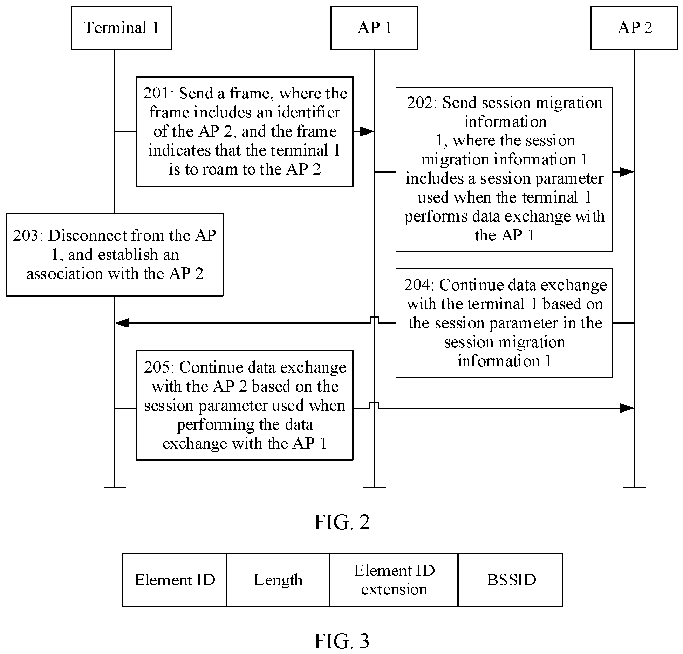

In an implementation of this application, FIG. 2 is a schematic flowchart of a terminal roaming method according to an implementation of this application. This implementation has not been claimed as such. The remaining description should be construed accordingly. As shown in FIG. 2, the method includes step 201 to step 205. The method may be applied to the WLAN shown in FIG. 1. For ease of description, an example in which the WLAN includes a terminal 1, an AP 1, and an AP 2 is used for description in this implementation of this application. The AP 1 is an associated AP of the terminal 1, and the AP 2 is a roaming target AP of the terminal 1.

Step 201: The terminal 1 sends a frame to the AP 1, where the frame includes an identifier of the AP 2, and the frame indicates that the terminal 1 is to roam to the AP 2.

Optionally, the AP 2 is a neighbor AP of the AP 1. There is region in which a signal coverage area of the AP 1 overlaps a signal coverage area of the AP 2. When the terminal 1 moves from the signal coverage area of the AP 1 to the signal coverage area of the AP 2, and received signal strength of the terminal 1 to the AP 2 is higher than received signal strength of the terminal 1 to the AP 1, and/or received signal strength of the terminal 1 to the AP 1 is less than a signal strength threshold, the terminal 1 triggers the terminal 1 to perform a roaming handover. Alternatively, the AP 1 may trigger the terminal 1 to perform roaming handover. A condition for triggering the terminal to perform roaming handover is not limited in this implementation of this application. Before the roaming handover, the terminal 1 sends, to the AP 1, the frame indicating that the terminal 1 is to roam to the AP 2.

A neighbor AP of an AP refers to an AP near the AP. For example, if received signal strength of an AP to another AP is greater than a signal strength threshold, the another AP is a neighbor AP of the AP. For another example, if a possible roaming relationship exists between an AP and another AP (for example, the two APs are respectively disposed in two adjacent rooms, and although a wall blocks signal transmission between the two APs, when a terminal moves from one room to the other room, the terminal roams between the two APs, that is, a roaming relationship exists between the two APs), the another AP is a neighbor AP of the AP. For another example, planning personnel manually configure in AP information about a neighbor AP.

Optionally, the AP 1 and the AP 2 have a same device series. That the device series are the same includes that, for example, device name prefixes are the same, device functions are similar, or device vendors are the same. Two APs of a same device series have a same device model or different device models. A plurality of APs of a same device series are deployed in the WLAN, to ensure that communication functions of the plurality of APs are the same or similar as much as possible, so that a success rate of session parameter migration can be improved, so as to improve feasibility of the technical solutions of this application.

Optionally, the frame that is sent by the terminal 1 to the AP 1 and that indicates that the terminal 1 is to roam to the AP 2 may be implemented based on a management frame, a control frame, or a data frame of a WLAN protocol. An identifier of an AP may be a basic service set identifier (basic service set identifier, BSSID) of the AP, a hardware address of the AP, or another identifier that can uniquely identify the AP in the WLAN.

In this implementation of this application, a frame element may be pre-defined to indicate that the terminal is to roam. The frame element is encapsulated in a data (data) portion of a data frame, a changeable field of a control frame, or a frame body (frame body) of a management frame, to obtain a frame indicating that the terminal is to roam to a roaming target AP. For example, FIG. 3 is a schematic diagram of a structure of a frame element according to an implementation of this application. As shown in FIG. 3, the frame element includes an element identifier (element ID) field, a length (length) field, an element ID extension (element ID extension) field, and a BSSID field. A value of the element ID field and/or the element ID extension field is set to a pre-defined specific value, to indicate that the terminal is to roam. The element ID field, the length field, and the element ID extension field may be set according to a format specified in the WLAN protocol. The BSSID field is used to carry a BSSID of the roaming target AP.

Step 202: The AP 1 sends session migration information 1 to the AP 2, where the session migration information 1 includes a session parameter used when the terminal 1 performs data exchange with the AP 1.

Optionally, the session parameter used when the AP 1 performs the data exchange with the terminal 1 may be a session parameter obtained through negotiation between the AP 1 and the terminal 1, or may be a session parameter that is obtained through migration and used when the terminal 1 performs data exchange with a previous associated AP.

The AP 1 may send the session migration information 1 to the AP 2 in a wired manner. For example, in step 202, the AP 1 may directly send the session migration information 1 to the AP 2 through a wired interface. After receiving the frame from the terminal 1, the AP 1 can detect that the terminal 1 is to roam to the AP 2. In this case, the AP 1 sorts out the session parameter used when the AP 1 performs the data exchange with the terminal 1, and then directly sends, to the AP 2, the session migration information 1 including the session parameter used when the terminal 1 performs data exchange with the AP 1.

Alternatively, in step 202, the AP 1 may indirectly send the session migration information 1 to the AP 2. The AP 1 sorts out the session parameter used when the AP 1 performs the data exchange with the terminal 1, and sends, to the wireless controller, the session parameter used when the AP 1 performs the data exchange with the terminal 1, and then the wireless controller sends, to the AP 2, the session parameter used when the AP 1 performs the data exchange with the terminal 1. For example, the AP 1 may send, to the wireless controller in a control and provisioning of wireless access points (control and provisioning of wireless access points, CAPWAP) manner, the session parameter used when the AP 1 performs the data exchange with the terminal 1, and then the wireless controller sends, to the AP 2 in the CAPWAP manner, the session parameter used when the AP 1 performs the data exchange with the terminal 1. Before step 201 is performed, the AP 1 may send, to the wireless controller in advance, the session parameter used when the AP 1 performs the data exchange with the terminal 1, and the wireless controller stores the session parameter. After the AP 1 detects that the terminal 1 is to roam to the AP 2, the AP 1 requests the wireless controller to send, to the AP 2, the stored session parameter used when the AP 1 performs the data exchange with the terminal 1. Alternatively, after detecting that the terminal 1 is to roam to the AP 2, the AP 1 may send, to the wireless controller, the session parameter used when the AP 1 performs the data exchange with the terminal 1, and then the wireless controller forwards the session parameter to the AP 2.

Optionally, the session migration information 1 includes but is not limited to a BA session parameter and/or a TWT session parameter. If the terminal 1 performs data exchange with the AP 1 based on a BA session mechanism, the session migration information 1 may include the BA session parameter. If the terminal 1 performs data exchange with the AP 1 based on a TWT session mechanism, the session migration information 1 may include the TWT session parameter. If the terminal 1 performs data exchange with the AP 1 based on the BA session mechanism and the TWT mechanism, the session migration information 1 may include the BA session parameter and the TWT session parameter.

Optionally, the BA session parameter includes one or more of a BA reply mechanism, a BA session window size, a BA start sequence number, or a BA timeout time length. The BA reply mechanism is classified into implicit BA and explicit BA. In the WLAN, the terminal and the AP separately negotiate corresponding BA session parameters for different service priorities, that is, each service priority is corresponding to one BA session. The service priority may be represented by using a service identifier (traffic identifier, TID). A TID 0 to a TID 7 are usually used to represent eight service priorities.

Optionally, the session migration information 1 includes BA session parameters corresponding to one or more service priorities. For example, if the terminal 1 and the AP 1 have successfully negotiated BA session parameters corresponding to a TID 0, a TID 2, a TID 4, and a TID 6, the session migration information 1 may include the BA session parameters corresponding to the TID 0, the TID 2, the TID 4, and the TID 6.

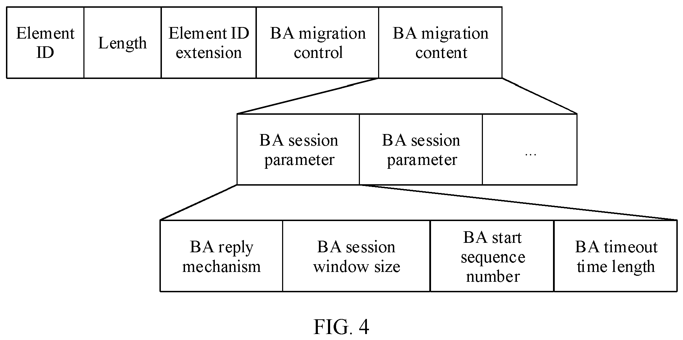

In this implementation of this application, a BA migration element may be pre-defined to carry the BA session parameter. For example, FIG. 4 is a schematic diagram of a structure of a BA migration element according to an implementation of this application. As shown in FIG. 4, the BA migration element includes an element ID field, a length field, an element ID extension field, a BA migration control (BA migration control) field, and a BA migration content (BA migration content) field. The element is indicated as a BA migration element by setting the element ID field and/or the element ID extension field to a pre-defined specific value. The element ID field, the length field, and the element ID extension field may be set according to a format specified in the WLAN protocol, or may be set according to a pre-agreed format. The BA migration control field is used to indicate a BA session parameter that is corresponding to a specific service priority and that is included in the BA migration content field. The BA migration content field includes one or more BA session parameter fields that are in a one-to-one correspondence with one or more service priorities. For example, if a value of the BA migration control field is 01010101, it indicates that the BA migration content field sequentially includes a BA session parameter corresponding to the TID 0, a BA session parameter corresponding to the TID 2, a BA session parameter corresponding to the TID 4, and a BA session parameter corresponding to the TID 6. The BA session parameter field may include a BA reply mechanism field, a BA session window size field, a BA start sequence number field, and a BA timeout time length field.

Optionally, the TWT session parameter includes one or more of an uplink data sending manner, a TWT working mode, a terminal status announcement manner, a TWT flow identifier, a TWT wake interval, an indication indicating whether to enable a TWT protection mechanism, duration of a TWT service period (service period, SP), or an indication of a primary channel used by the terminal during a TWT SP. The TWT flow identifier is used to distinguish between different types of service flows on a same terminal, and the different types of service flows are represented by using different TWT flow identifiers. In the WLAN, the terminal and the AP may separately negotiate corresponding TWT session parameters for different types of service flows, that is, each type of service flow is corresponding to one TWT session. One type of service flow includes one or more service flows. TWT session parameters corresponding to all service flows of a same type of service flow are the same. TWT session parameters corresponding to different types of service flows are usually different.

Optionally, the session migration information 1 includes TWT session parameters corresponding to one or more types of service flows. For example, if the terminal 1 and the AP 1 have successfully negotiated TWT session parameters corresponding to a service flow 1, a service flow 2, a service flow 3, and a service flow 4, the session migration information 1 may include the TWT session parameters corresponding to the service flow 1, the service flow 2, the service flow 3, and the service flow 4.

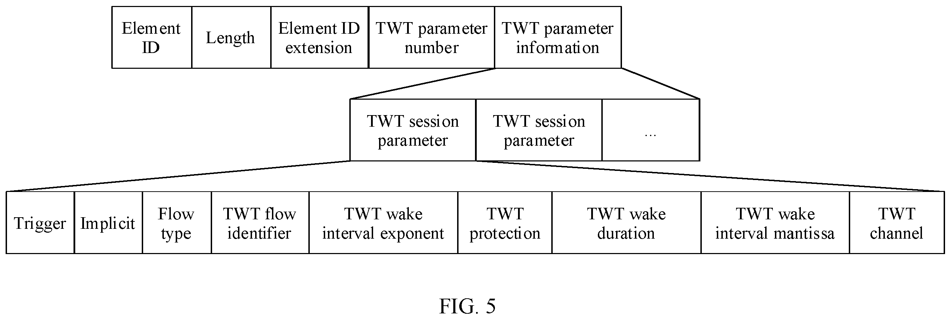

In this implementation of this application, a TWT migration element may be pre-defined to carry the TWT session parameter. For example, FIG. 5 is a schematic diagram of a structure of a TWT migration element according to an implementation of this application. As shown in FIG. 5, the TWT migration element includes an element ID field, a length field, an element ID extension field, a TWT parameter number (TWT parameter number) field, and a TWT parameter information (TWT parameter information) field. The element is indicated as a TWT migration element by setting the element ID field and/or the element ID extension field to a pre-defined specific value (different from a value corresponding to the BA migration element). The element ID field, the length field, and the element ID extension field may be set according to a format specified in the WLAN protocol, or may be set according to a pre-agreed format.

The TWT parameter number field is used to indicate TWT session parameters that are corresponding to a specific quantity of types of service flows and that are included in the TWT parameter information field, that is, indicate a quantity of migration TWT sessions. The TWT parameter information field includes one or more TWT session parameter fields that are in a one-to-one correspondence with one or more types of service flows. The TWT session parameter field includes a trigger (trigger) field, an implicit (implicit) field, a flow type (flow type) field, a TWT flow identifier (TWT flow ID) field, a TWT wake interval exponent (TWT wake interval exponent) field, a TWT protection (TWT protection) field, a TWT wake duration (TWT wake duration) field, a TWT wake interval mantissa (TWT wake interval mantissa) field, and a TWT channel (TWT channel) field.

The trigger field is used to indicate an uplink data sending manner. For example, if a value of the trigger field is 1, it indicates that during the TWT SP, the terminal needs to send uplink data in a manner of waiting for the AP to use trigger frame (trigger frame) scheduling. If a value of the trigger field is 0, it indicates that during the TWT SP, the terminal sends uplink data in a manner of enhanced distributed channel access (enhanced distributed channel access, EDCA) contention.

The implicit field is used to indicate the TWT working mode. For example, if a value of the implicit field is 1, it indicates that the TWT is an implicit TWT, a value of the implicit TWT is periodic, and a start time point of a next TWT SP is a start time point of a current TWT SP plus the TWT wake interval. If a value of the implicit field is 0, the TWT is an explicit TWT. A value of the explicit TWT is valid only once.

The flow type field is used to indicate the terminal status announcement manner. For example, if a value of the flow type field is 0, it indicates that during the TWT SP, the terminal first needs to send a power save poll (power save poll, PS-Poll) frame or an automatic power save delivery (automatic power save delivery, APSD) trigger frame to the AP, to indicate that the terminal is already in an awake state, and then the AP can send a packet to the terminal. If a value of the flow type field is 1, it indicates that during the TWT SP, the terminal does not need to send a PS-Poll frame or an APSD trigger frame to the AP, and the AP can directly send a packet to the terminal.

The TWT flow identifier field is used to indicate a service flow to which the TWT session parameter is applied. Different types of service flows are represented by using different TWT flow identifiers. The TWT flow identifier may be an identifier of a unicast TWT protocol, to indicate that a maximum of eight unicast TWT sessions are supported, that is, a maximum of eight types of service flows are supported.

The TWT wake interval exponent and the TWT wake interval mantissa are used together to determine the TWT wake interval. A calculation formula is as follows: TWT wake interval = TWT wake interval mantissa × (2^TWT wake interval exponent).

The TWT protection field is used to indicate whether to enable the TWT protection mechanism. If a value of the TWT protection field is 1, it indicates that the TWT protection mechanism is enabled, that is, the terminal requests the AP to protect the TWT SP. In this case, the AP protects the TWT SP by enabling a network allocation vector (network allocation vector, NAV) protection function. That is, each transmission opportunity (transmission opportunity, TXOP) during the TWT SP needs to have a NAV protection mechanism, for example, using a request to send (request to send, RTS) frame/clear to send (clear to send, CTS) frame, or using a CTS-to-self frame. If a value of the TWT protection field is 0, it indicates that the TWT protection mechanism is not enabled.

The TWT wake duration field is used to indicate duration of the TWT SP.

The TWT channel field is used to indicate the primary channel used by the terminal during the TWT SP.

Optionally, the AP 1 encapsulates, by using an Ethernet header, the BA migration element shown in FIG. 4 and/or the TWT migration element shown in FIG. 5, and then sends an encapsulated Ethernet packet to the AP 2 in a wired manner.

Step 203: The terminal 1 disconnects from the AP 1, and establishes an association with the AP 2.

Optionally, an operating channel of the AP 1 is different from an operating channel of the AP 2. An implementation process of step 203 includes: The terminal 1 switches an operating channel from the operating channel of the AP 1 to the operating channel of the AP 2, to associate with the AP 2.

Optionally, a trigger manner in which the terminal 1 disconnects from the AP 1 and establishes an association with the AP 2 includes but is not limited to the following three implementations.

In a first implementation, after receiving the session migration information 1 from the AP 1, the AP 2 sends acknowledgment information to the AP 1, where the acknowledgment information indicates that the AP 2 has successfully received the session migration information 1. After receiving the acknowledgment information from the AP 2, the AP 1 sends a disassociation frame to the terminal 1. After receiving the disassociation frame from the AP 1, the terminal 1 disconnects from the AP 1 and establishes the association with the AP 2.

In a second implementation, after receiving the session migration information 1 from the AP 1, the AP 2 sends acknowledgment information to the AP 1, where the acknowledgment information indicates that the AP 2 has successfully received the session migration information 1. After receiving the acknowledgment information from the AP 2, the AP 1 sends an acknowledgment frame to the terminal 1, where the acknowledgment frame indicates that the session parameter used when the terminal 1 performs data exchange with the AP 1 has been successfully migrated to the AP 2. After receiving the acknowledgment frame from the AP 1, the terminal 1 sends a disassociation frame to the AP 1 to disconnect from the AP 1, and further establishes the association with the AP 2.

In a third implementation, a time length of a frame that is sent by the terminal 1 to the AP 1 and that indicates that the terminal 1 is to roam to the AP 2 reaches a preset time length, and the terminal sends a disassociation frame to the AP 1 to disconnect from the AP 1, and further establishes the association with the AP 2.

Step 204: The AP 2 continues data exchange with the terminal 1 based on the session parameter in the session migration information 1.

After receiving the session migration information 1 from the AP 1, the AP 2 parses the session migration information 1 to obtain the session parameter used when the terminal 1 performs data exchange with the AP 1. After the terminal 1 is associated with the AP 2, the AP 2 continues data exchange with the terminal 1 based on the session parameter.

Optionally, the session migration information 1 includes the BA session parameter. That the AP 2 continues data exchange with the terminal 1 based on the BA session parameter in the session migration information 1 may be understood as follows: When a service flow of a specific service priority needs to be transmitted between the AP 2 and the terminal 1, the AP 2 sends the service flow to the terminal 1 based on a BA session parameter corresponding to the service priority in the session migration information 1. For example, if the session migration information 1 includes the BA session parameter corresponding to the TID 0, the AP 2 may directly send a service flow of the TID 0 to the terminal 1 based on the BA session parameter. Before resuming transmission of a service flow on the terminal 1, the AP 2 does not need to perform BA session negotiation with the terminal 1 again, so that a service transmission delay caused by a roaming handover of the terminal can be reduced.

Optionally, the session migration information 1 includes the TWT session parameter. That the AP 2 continues data exchange with the terminal 1 based on the TWT session parameter in the session migration information 1 may be understood as that the AP 2 continues to maintain a session manner of a corresponding service flow based on the TWT session parameter in the session migration information 1. In this case, after the terminal 1 is associated with the AP 2, the terminal 1 may indicate, to the AP 2, a time point at which a TWT SP corresponding to the service flow starts to be effective, so that the AP 2 can keep a TWT session period consistent with a TWT session period of the terminal 1. Before resuming transmission of a service flow on the terminal 1, the AP 2 does not need to perform TWT session negotiation with the terminal 1 again, so that a service transmission delay caused by a roaming handover of the terminal can be reduced.

If the AP 2 does not support use of a specific session parameter in the session migration information 1, after the terminal 1 is associated with the AP 2, the AP 2 may immediately initiate a session negotiation procedure for the session parameter to the terminal 1. For example, if the AP 2 does not support use of the BA session parameter corresponding to the TID 0 in the session migration information 1, the AP 2 and the terminal 1 may renegotiate the BA session parameter corresponding to the TID 0. For a process in which the AP negotiates the BA session parameter and the TWT session parameter with the terminal, refer to a related WLAN protocol. Details are not described in this implementation of this application. In the session parameter migration mechanism provided in this implementation of this application, the roaming target AP can detect, based on the session migration information, a specific service flow on the terminal that is to roam to the roaming target AP. Therefore, after the terminal is associated with the roaming target AP, the roaming target AP may immediately perform session negotiation with the terminal for a session parameter that is not supported by the roaming target AP, and does not need to wait until there is a service flow transmission requirement to perform session negotiation. This reduces a service transmission delay to some extent.

Step 205: The terminal 1 continues data exchange with the AP 2 based on the session parameter used when the terminal 1 performs the data exchange with the AP 1.

If the terminal 1 does not receive a response after sending a data frame to the AP 2 based on the session parameter used when the terminal 1 performs data exchange with the AP 1, the AP 2 may not support use of the session parameter. In this case, the terminal 1 may initiate a session negotiation procedure for the session parameter to the AP 2, to renegotiate the session parameter.

In this implementation of this application, before roaming, the terminal indicates an associated AP of the terminal to send session migration information to the roaming target AP. After the terminal is associated with the roaming target AP, the roaming target AP can continue the data exchange with the terminal based on the migrated session parameter, and the terminal can also continue data exchange with the roaming target AP based on the session parameter used when the terminal performs data exchange with the original associated AP. The terminal and the roaming target AP do not need to perform session negotiation again, to shorten a data service recovery time required after a roaming handover of the terminal, and reduce a service transmission delay. This improves smoothness of roaming handover of the terminal.

FIG. 6 is a schematic flowchart of a terminal roaming method according to the claimed invention. The remaining description should be construed accordingly. As shown in FIG. 6, the method includes step 601 to step 603. The method may be applied to the WLAN shown in FIG. 1. For ease of description, an example in which the WLAN includes a terminal 2, an AP 3, and an AP 4 is used for description in this implementation of this application. The AP 3 is an original associated AP of the terminal 2, and the AP 4 is a roaming target AP of the terminal 2.

Step 601: The terminal 2 sends session migration information 2 to the AP 4, where the session migration information 2 includes a session parameter used when the terminal 2 performs data exchange with the AP 3.

Optionally, the terminal 2 sends the session migration information 2 to the AP 4 by using one or more WLAN frames. For a relationship between the AP 3 and the AP 4, refer to the description of the relationship between the AP 1 and the AP 2 in step 201. Details are not described herein again in this implementation of this application.

In an implementation, the terminal 2 sends the session migration information 2 to the AP 4 in a process of associating with the AP 4, where the session migration information 2 is in an authentication request and/or an association request. The authentication request may be specifically an authentication request frame, and the association request may be specifically an association request frame or a re-association request frame.

Optionally, that the session migration information 2 is in the authentication request and/or the association request may be understood as that the authentication request includes session parameters corresponding to one or more service priorities and/or session parameters corresponding to one or more service flows; or the association request includes session parameters corresponding to one or more service priorities and/or session parameters corresponding to one or more service flows; or the authentication request includes session parameters corresponding to one or more service priorities and/or session parameters corresponding to one or more service flows, and the association request also includes session parameters corresponding to one or more service priorities and/or session parameters corresponding to one or more service flows. For example, a session parameter corresponding to a service priority may be a session parameter corresponding to a BA session. A session parameter corresponding to a service flow may be a session parameter corresponding to a TWT session.

In this implementation, before being associated with the roaming target AP, the terminal may send, to the roaming target AP by using the authentication request and/or the association request, a session parameter corresponding to one session at a time or send session parameters corresponding to a plurality of sessions at a time. In this way, after the terminal is associated with the roaming target AP, the roaming target AP can continue data exchange of a corresponding session with the terminal based on the migrated session parameter, the terminal and the roaming target AP do not need to perform session negotiation again, and the terminal can quickly resume service transmission, to reduce a service transmission delay.

In another implementation, after the terminal 2 is associated with the AP 4, the terminal 2 sends the session migration information 2 to the AP 4, where the session migration information 2 is in a session migration frame sent by the terminal 2 after the terminal 2 is associated with the AP 4. The session migration frame includes session parameters corresponding to a plurality of service priorities and/or session parameters corresponding to a plurality of service flows. Optionally, the session migration frame may be a management frame, a control frame, or a data frame. The session parameters corresponding to a plurality of service priorities may include BA session parameters respectively corresponding to the plurality of service priorities. The session parameters corresponding to a plurality of service flows may include TWT session parameters respectively corresponding to the plurality of service flows.

In this implementation, after being associated with the roaming target AP, the terminal may send, to the roaming target AP by using one or more session migration frames, a session parameter used when the terminal performs data exchange with the original associated AP. When the terminal or the roaming target AP has a service transmission requirement, data exchange can be performed based on the session parameter used when the terminal performs the data exchange with the original associated AP. In this way, the terminal and the roaming target AP do not need to perform session negotiation again, and service transmission can be quickly resumed, to reduce a service transmission delay. In addition, because the session migration frame includes the session parameters corresponding to a plurality of service priorities and/or the session parameters corresponding to a plurality of service flows, that is, the terminal can send, to the roaming target AP by using one session migration frame, session parameters corresponding to a plurality of sessions. Compared with a current solution in which only a session parameter corresponding to one session can be transmitted through negotiation at a time, in this implementation of this application, a quantity of times of transmitting the session parameters through an air interface is reduced, so that air interface resources occupied for transmitting the session parameters are reduced, saving air interface resources.

Optionally, the session migration information 2 includes but is not limited to a BA session parameter and/or a TWT session parameter. For an explanation of the session migration information 2, refer to the related explanation of the session migration information 1 in step 202. Details are not described herein again in this implementation of this application. If the terminal 2 sends the session migration information 2 to the AP 4 by using a management frame such as an authentication request frame, an association request frame, or a re-association request frame, the terminal 2 may encapsulate a BA migration element shown in FIG. 4 and/or a TWT migration element shown in FIG. 5 into a frame body of the management frame, and then send an encapsulated management frame to the AP 4 through an air interface. If the terminal 2 sends the session migration information 2 to the AP 4 by using a separate session migration frame after being associated with the AP 4, the terminal 2 may encapsulate a BA migration element shown in FIG. 4 and/or a TWT migration element shown in FIG. 5 through a WLAN header, and then send an encapsulated WLAN frame to the AP 4 through an air interface.

Step 602: After the terminal 2 is associated with the AP 4, the AP 4 continues data exchange with the terminal 2 based on the session parameter in the session migration information 2.

For an implementation process of step 602, refer to related descriptions of step 204. Details are not described herein again in this implementation of this application.

Step 603: After the terminal 2 is associated with the AP 4, the terminal 2 continues data exchange with the AP 4 based on the session parameter used when performing data exchange with the AP 3.

For an implementation process of step 603, refer to related descriptions of step 205. Details are not described herein again in this implementation of this application.

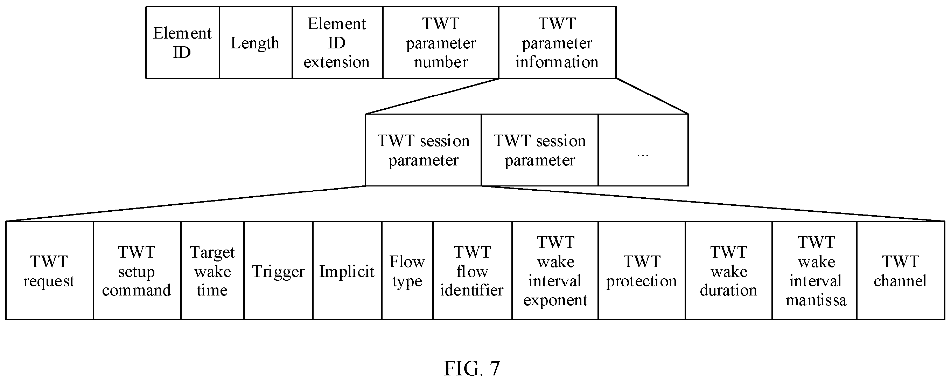

Optionally, the TWT session parameter sent by the terminal to the roaming target AP through the air interface may further include a TWT request direction, a TWT setup command type, and/or an indication of a time point at which a TWT SP starts to be effective. For example, FIG. 7 is a schematic diagram of a structure of another TWT migration element according to an implementation of this application. As shown in FIG. 7, in addition to the fields shown in FIG. 5, a TWT session parameter field in the TWT migration element further includes a TWT request (TWT request) field, a TWT setup command (TWT setup command) field, and a target wake time (target wake time) field.

The TWT request field is used to indicate a TWT request direction. For example, if a value of the TWT request field is 0, it indicates that a frame is sent by a TWT responding terminal. For example, if a value of the TWT request field is 1, it indicates that a frame is sent by a TWT request terminal. The TWT setup command field is used to indicate the TWT setup command type, and is classified into request TWT, suggest TWT, expect TWT, accept TWT, candidate TWT, indicate TWT, and reject TWT. For specific explanations, refer to a related WLAN protocol. The target wake time field is used to indicate the time point at which a TWT SP starts to be effective.

If the terminal 2 migrates the TWT session parameter to the AP 4 by using the TWT migration element shown in FIG. 7, after the terminal 2 is associated with the AP 4, the terminal 2 does not need to separately indicate, to the AP 4, a time point when a TWT SP corresponding to the service flow starts to be effective, so that the AP 4 can keep a TWT session period consistent with a TWT session period of the terminal 2.

For example, an implementation process in which the terminal 2 migrates the TWT session parameter to the AP 4 is as follows: The terminal 2 encapsulates a TWT migration element shown in FIG. 7 into an authentication request frame and sends the authentication request frame to the AP 4, where a value of a TWT request field is set to 1, a value of a TWT setup command field is set to 0 (request TWT), 1 (suggest TWT), or 2 (expect TWT), and a value of a target wake time field is set to a time point at which a TWT SP starts to be effective. If the AP 4 supports use of the migrated TWT session parameter, when returning an authentication response frame to the terminal 2, the AP 4 sets a value of a corresponding TWT request field to 0, and sets a value of a TWT setup command field to 4 (accept TWT). In this case, the terminal 2 determines that the TWT session parameter has been successfully migrated. If the AP 4 does not support use of the migrated TWT session parameter, when returning an authentication response frame to the terminal 2, the AP 4 sets a value of a corresponding TWT request field to 0, and sets a value of a TWT setup command field to 5 (candidate TWT) or 6 (indicate TWT). In this case, the terminal 2 determines that the TWT session parameter is not successfully migrated. Further, the terminal 2 may create, in an association request frame or a re-association request frame, a new TWT unicast setup request frame by using a parameter indicated in the candidate TWT or the indicate TWT replied by the AP 4, and send the new TWT unicast setup request frame to the AP 4, to establish a unicast TWT protocol with the AP 4.

In this implementation of this application, in a roaming process or after roaming is completed, the terminal sends the session migration information to the roaming target AP. After the terminal is associated with the roaming target AP, the roaming target AP can continue the data exchange with the terminal based on the migrated session parameter, and the terminal can also continue data exchange with the roaming target AP based on the session parameter used when the terminal performs data exchange with the original associated AP. The terminal and the roaming target AP do not need to perform session negotiation again, to shorten a data service recovery time required after a roaming handover of the terminal, and reduce a service transmission delay. This improves smoothness of roaming handover of the terminal.

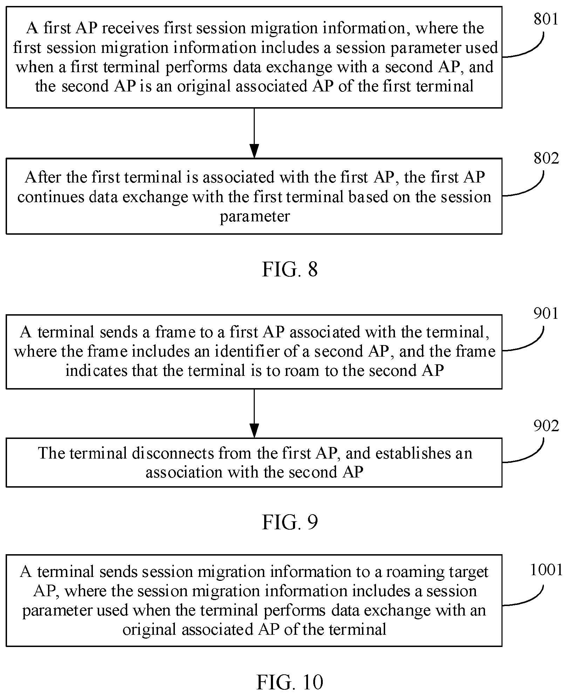

FIG. 8 is a schematic flowchart of still another terminal roaming method according to the claimed invention. A WLAN to which the method is applied includes at least a first terminal, a second terminal, a first AP, and a second AP. The method is specifically used to implement the method in the implementation corresponding to FIG. 6. As shown in FIG. 8, the method includes the following steps.

Step 801: The first AP receives first session migration information, where the first session migration information includes a session parameter used when the first terminal performs data exchange with the second AP, and the second AP is an original associated AP of the first terminal.

Step 802: After the first terminal is associated with the first AP, the first AP continues data exchange with the first terminal based on the session parameter.

In an example which is not according to the invention and is provided for illustrative purposes to support a better understanding of the invention, when the method is specifically used to implement the method in the implementation corresponding to FIG. 2, the first AP may be, for example, the AP 2, the second AP may be, for example, the AP 1, the first terminal may be, for example, the terminal 1, and the first session migration information may be, for example, the session migration information 1. For a specific implementation process of step 801 and step 802, refer to related descriptions in the implementation shown in FIG. 2. Details are not described herein again. Alternatively, when the method is specifically used to implement the method in the implementation corresponding to FIG. 6, the first AP is the AP 4, the second AP is the AP 3, the first terminal is the terminal 2, and the first session migration information is the session migration information 2. For a specific implementation process of step 801 and step 802, refer to related descriptions in the implementation shown in FIG. 6. Details are not described herein again.

In an example which is not according to the invention and is provided for illustrative purposes to support a better understanding of the invention, an implementation in which the first AP receives the first session migration information includes: The first AP receives the first session migration information from the second AP. This implementation is specifically used to implement the method in the implementation corresponding to FIG. 2.

According to the embodiments of the invention in which the first AP receives the first session migration information includes: The first AP receives the first session migration information from the first terminal. This implementation is specifically used to implement the method in the implementation corresponding to FIG. 6.

Optionally, the first session migration information is in an authentication request and/or an association request. Alternatively, the first session migration information is in a session migration frame sent by the first terminal after the first terminal is associated with the first AP, and the session migration frame includes session parameters corresponding to a plurality of service priorities and/or session parameters corresponding to a plurality of service flows.

Optionally, the first session migration information includes a block acknowledgment session parameter and/or a target wake time session parameter.

Optionally, the first AP and the second AP have a same device series.

Optionally, the foregoing method further includes: The first AP receives a frame from the second terminal associated with the first AP, where the frame includes an identifier of a third AP, and the frame indicates that the second terminal is to roam to the third AP. The first AP sends second session migration information to the third AP, where the second session migration information includes a session parameter used when the second terminal performs data exchange with the first AP. When the method is specifically used to implement the method in the implementation corresponding to FIG. 2, the first AP may be, for example, the AP 1, the third AP may be, for example, the AP 2, the second terminal may be, for example, the terminal 1, and the second session migration information may be, for example, the session migration information 1.

FIG. 9 is a schematic flowchart of yet another terminal roaming method according to an implementation of this application. This implementation has not been claimed as such. The remaining description should be construed accordingly. A WLAN to which the method is applied includes at least a terminal, a first AP, and a second AP. The method may be specifically used to implement the method in the implementation corresponding to FIG. 2. As shown in FIG. 9, the method includes the following steps.

Step 901: The terminal sends a frame to the first AP associated with the terminal, where the frame includes an identifier of the second AP, and the frame indicates that the terminal is to roam to the second AP.

Step 902: The terminal disconnects from the first AP, and establishes an association with the second AP.

When the method is specifically used to implement the method in the implementation corresponding to FIG. 2, the first AP may be, for example, the AP 1, the second AP may be, for example, the AP 2, and the terminal may be, for example, the terminal 1. For a specific implementation process of step 901 and step 902, refer to related descriptions in the implementation shown in FIG. 2. Details are not described herein again.

FIG. 10 is a schematic flowchart of yet still another terminal roaming method according to the claimed invention. A WLAN to which the method is applied includes at least a terminal, an original associated AP of the terminal, and a roaming target AP of the terminal. The method may be specifically used to implement the method in the implementation corresponding to FIG. 6. As shown in FIG. 10, the method includes the following steps.

Step 1001: The terminal sends session migration information to the roaming target AP, where the session migration information includes a session parameter used when the terminal performs data exchange with the original associated AP of the terminal.

When the method is specifically used to implement the method in the implementation corresponding to FIG. 6, the terminal may be, for example, the terminal 2, the original associated AP of the terminal may be, for example, the AP 3, and the roaming target AP of the terminal may be, for example, the AP 4. For a specific implementation process of step 1001, refer to related descriptions in the implementation shown in FIG. 6. Details are not described herein again.

Optionally, the session migration information is in an authentication request and/or an association request.

Optionally, the session migration information is in a session migration frame sent by the terminal after the terminal is associated with the roaming target AP, and the session migration frame includes session parameters corresponding to a plurality of service priorities and/or session parameters corresponding to a plurality of service flows.

Optionally, the session migration information includes a block acknowledgment session parameter and/or a target wake time session parameter.

Optionally, after the terminal is associated with the roaming target AP, the terminal continues data exchange with the roaming target AP based on the session parameter used when the terminal performs data exchange with the original associated AP.

A sequence of steps of the foregoing terminal roaming method provided in implementations of this application may be appropriately adjusted, or steps may be correspondingly added or deleted based on a situation. Any variation method readily figured out by a person skilled in the art within the technical scope disclosed in this application shall fall within the protection scope of this application. Therefore, details are not described herein.

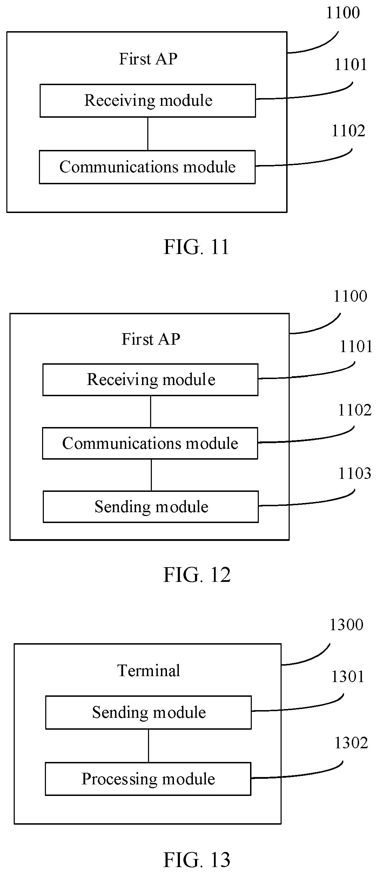

FIG. 11 is a schematic diagram of a structure of a first AP in a wireless local area network according to an implementation of this application. As shown in FIG. 11, the apparatus 1100 includes:
a receiving module 1101, configured to receive first session migration information, where the first session migration information includes a session parameter used when a first terminal performs data exchange with a second AP, and the second AP is an original associated AP of the first terminal; and
a communications module 1102, configured to: after the first terminal is associated with the first AP, continue the data exchange with the first terminal based on the session parameter.

Optionally, the receiving module 1101 is configured to receive the first session migration information from the second AP. This implementation has not been claimed as such. The remaining description should be construed accordingly.

The receiving module 1101 is configured to receive the first session migration information from the first terminal.

Optionally, the first session migration information is in an authentication request and/or an association request.

Optionally, the first session migration information is in a session migration frame sent by the first terminal after the first terminal is associated with the first AP, and the session migration frame includes session parameters corresponding to a plurality of service priorities and/or session parameters corresponding to a plurality of service flows.

Optionally, the first session migration information includes a block acknowledgment session parameter and/or a target wake time session parameter.

Optionally, the first AP and the second AP have a same device series.

Optionally, as shown in FIG. 12, the apparatus 1100 further includes a sending module 1103.

The receiving module 1101 is further configured to receive a frame from a second terminal associated with the first AP, where the frame includes an identifier of a third AP, and the frame indicates that the second terminal is to roam to the third AP. The sending module 1103 is configured to send second session migration information to the third AP, where the second session migration information includes a session parameter used when the second terminal performs data exchange with the first AP.

FIG. 13 is a schematic diagram of a structure of a terminal in a wireless local area network according to an implementation of this application. This implementation has not been claimed as such. The remaining description should be construed accordingly. As shown in FIG. 13, the terminal 1300 includes:
a sending module 1301, configured to send a frame to a first AP associated with the terminal, where the frame includes an identifier of a second AP, and the frame indicates that the terminal is to roam to the second AP; and
a processing module 1302, configured to: disconnect from the first AP, and establish an association with the second AP.

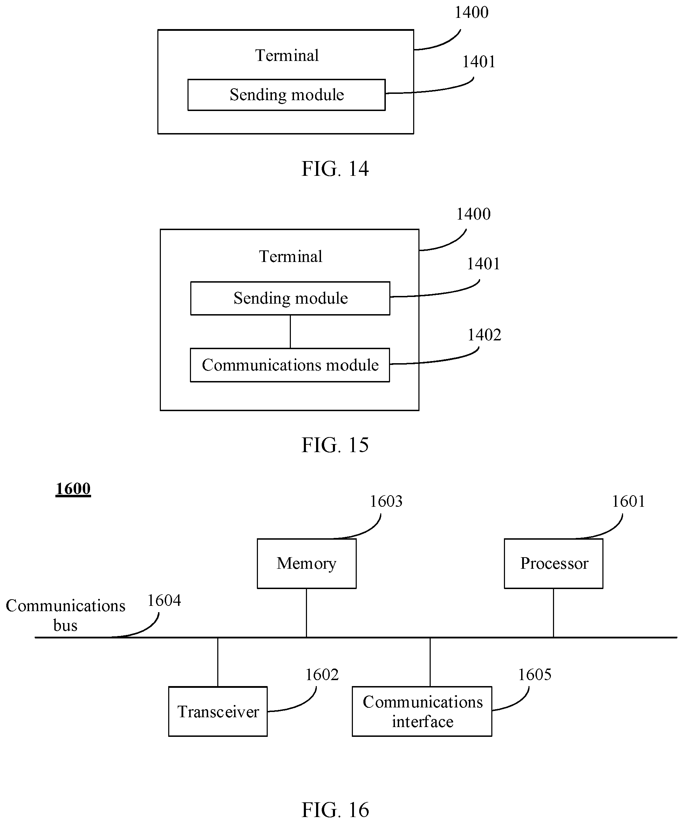

FIG. 14 is a schematic diagram of a structure of another terminal in a wireless local area network according to an implementation of this application. This implementation is according to the claimed invention. As shown in FIG. 14, the terminal 1400 includes:
a sending module 1401, configured to send session migration information to a roaming target AP, where the session migration information includes a session parameter used when the terminal performs data exchange with an original associated AP of the terminal.

Optionally, the session migration information is in an authentication request and/or an association request.

Optionally, the session migration information is in a session migration frame sent by the terminal after the terminal is associated with the roaming target AP, and the session migration frame includes session parameters corresponding to a plurality of service priorities and/or session parameters corresponding to a plurality of service flows.

Optionally, the session migration information includes a block acknowledgment session parameter and/or a target wake time session parameter.

Optionally, as shown in FIG. 15, the apparatus 1400 further includes: a communications module 1402, configured to: after the terminal is associated with the roaming target AP, continue data exchange with the roaming target AP based on the session parameter.

For the apparatuses in the foregoing implementations, specific manners of executing operations by each module are described in detail in implementations related to the methods, and details are not described herein.

An implementation of this application provides an AP, including a processor and a transceiver. The processor is configured to invoke a computer program, and collaborate with the transceiver to implement the actions performed by the AP in the implementation shown in FIG. 2, FIG. 6, or FIG. 8.

For example, FIG. 16 is a block diagram of an AP according to an implementation of this application. As shown in FIG. 16, the AP 1600 includes a processor 1601 and a transceiver 1602. The processor 1601 is configured to invoke a computer program, and collaborate with the transceiver 1602 to implement the actions performed by the AP in the implementation shown in FIG. 2, FIG. 6, or FIG. 8.

Optionally, the AP 1600 further includes a memory 1603, a communications bus 1604, and a communications interface 1605.

The processor 1601 may be a general-purpose central processing unit (central processing unit, CPU), an application-specific integrated circuit (application-specific integrated circuit, ASIC), or one or more integrated circuits configured to control program execution of the solutions of this application.

The communications bus 1604 may include a path for transmitting information between the foregoing components.

The memory 1603 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk or another magnetic storage device, or may be any other medium that can be used to carry or store expected program code in a form of an instruction or a data structure and that can be accessed by a computer. However, this is not limited thereto. The memory 1603 may exist independently, and be connected to the processor 1601 through the communications bus 1604. Alternatively, the memory 1603 may be integrated with the processor 1601.

The memory 1603 is configured to store program code for executing the solutions in this application, and the processor 1601 controls execution of the program code. The processor 1601 is configured to execute the program code stored in the memory 1603. The program code may include one or more software modules. The one or more software modules may be the software modules provided in the implementation shown in FIG. 11 or FIG. 12.

The communications interface 1605 uses the transceiver 1602 and is configured to communicate with another device or a communications network, such as the Ethernet, a radio access network (radio access network, RAN), or a WLAN.

In a specific implementation, in an implementation, the AP may include a plurality of processors. Each of the processors may be a single-core processor, or may be a multi-core processor. The processor herein may be one or more devices, circuits, and/or processing cores configured to process data (for example, computer program instructions).

An implementation of this application provides a terminal, including a processor and a transceiver. The processor is configured to invoke a computer program, and collaborate with the transceiver to implement the actions performed by the terminal in the implementation shown in FIG. 2, FIG. 6, FIG. 9, or FIG. 10.

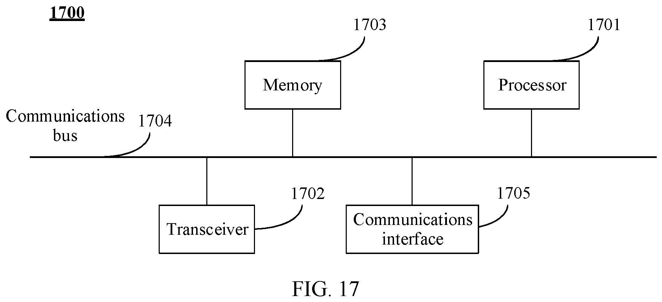

For example, FIG. 17 is a block diagram of a terminal according to an implementation of this application. As shown in FIG. 17, the terminal 1700 includes a processor 1701 and a transceiver 1702. The processor 1701 is configured to invoke a computer program, and collaborate with the transceiver 1702 to implement the actions performed by the terminal in the implementation shown in FIG. 2, FIG. 9, or FIG. 10.

Optionally, the terminal 1700 further includes a memory 1703, a communications bus 1704, and a communications interface 1705.

The processor 1701 may be a general-purpose CPU, an ASIC, or one or more integrated circuits configured to control program execution in the solutions of this application.

The communications bus 1704 may include a path for transmitting information between the foregoing components.

The memory 1703 may be a ROM or another type of static storage device that can store static information and instructions, or a RAM or another type of dynamic storage device that can store information and instructions, or may be an EEPROM, a CD-ROM or another compact disc storage, an optical disc storage (including a compact disc, a laser disc, an optical disc, a digital versatile disc, a Blu-ray disc, or the like), a magnetic disk or another magnetic storage device, or may be any other medium that can be used to carry or store expected program code in a form of an instruction or a data structure and that can be accessed by a computer. However, this is not limited thereto. The memory 1703 may exist independently, and be connected to the processor 1701 through the communications bus 1704. Alternatively, the memory 1703 may be integrated with the processor 1701.

The memory 1703 is configured to store program code for executing the solutions in this application, and the processor 1701 controls execution of the program code. The processor 1701 is configured to execute the program code stored in the memory 1703. The program code may include one or more software modules. The one or more software modules may be the software modules provided in the implementation shown in FIG. 13, FIG. 14, or FIG. 15.

The communications interface 1705 uses the transceiver 1702 and is configured to communicate with another device or a communications network, such as the Ethernet, a RAN, or a WLAN.

In a specific implementation, in an implementation, the terminal may include a plurality of processors. Each of the processors may be a single-core processor, or may be a multi-core processor. The processor herein may be one or more devices, circuits, and/or processing cores configured to process data (for example, computer program instructions).

An implementation of this application further provides a wireless local area network, including a terminal and a plurality of APs. The terminal is configured to perform actions performed by the terminal in the implementation shown in FIG. 2 or FIG. 9, and the AP is configured to perform actions performed by the AP in the implementation shown in FIG. 2 or FIG. 8. Alternatively, the terminal is configured to perform actions performed by the terminal in the implementation shown in FIG. 6 or FIG. 10, and the AP is configured to perform actions performed by the AP in the implementation shown in FIG. 6 or FIG. 8.

An implementation of this application further provides a computer-readable storage medium. The computer-readable storage medium stores instructions. When the instructions are executed by a processor of an access point, actions performed by the AP in the implementation shown in FIG. 2, FIG. 6, or FIG. 8 are implemented; or when the instructions are executed by a processor of a terminal, actions performed by the terminal in the implementation shown in FIG. 2, FIG. 6, FIG. 9, or FIG. 10 are implemented.

An implementation of this application further provides a computer program product, including a computer program. When the computer program is executed by a processor of an access point, actions performed by the AP in the implementation shown in FIG. 2, FIG. 6, or FIG. 8 are implemented; or when the computer program is executed by a processor of a terminal, actions performed by the terminal in the implementation shown in FIG. 2, FIG. 6, FIG. 9, or FIG. 10 are implemented.

A person of ordinary skill in the art may understand that all or some of the steps of the implementations may be implemented by hardware or a program instructing related hardware. The program may be stored in a computer-readable storage medium. The storage medium may be a read-only memory, a magnetic disk, an optical disc, or the like.

In implementations of this application, the terms "first", "second", and "third" are merely used for description, but cannot be understood as an indication or implication of relative importance.

The term "and/or" in this application describes only an association relationship between associated objects and indicates that three relationships may exist. For example, A and/or B may indicate the following cases: Only A exists, both A and B exist, and only B exists. In addition, the character "/" in this specification usually indicates an "or" relationship between the associated objects.

The scope of protection is defined by the appended claims.

## Claims

1. A terminal roaming method, applied to a wireless local area network, wherein the method comprises:
receiving (801), by a first access point, AP, first session migration information, wherein the first session migration information comprises a session parameter used when a first terminal performs data exchange with a second AP, and the second AP is an original associated AP of the first terminal; and
after the first terminal is associated with the first AP, continuing (802), by the first AP, the data exchange with the first terminal based on the session parameter;
wherein the receiving, by a first AP, first session migration information comprises:
receiving, by the first AP, the first session migration information from the first terminal.

2. The method according to claim 1, wherein the first session migration information is in an authentication request and/or an association request.

3. The method according to claim 1, wherein the first session migration information is in a session migration frame sent by the first terminal after the first terminal is associated with the first AP, and the session migration frame comprises session parameters corresponding to a plurality of service priorities and/or session parameters corresponding to a plurality of service flows.

4. The method according to any one of claims 1 to 3, wherein the first session migration information comprises a block acknowledgment session parameter and/or a target wake time session parameter.

5. The method according to any one of claims 1 to 4, wherein the method further comprises:
receiving, by the first AP, a frame from a second terminal associated with the first AP, wherein the frame comprises an identifier of a third AP, and the frame indicates that the second terminal is to roam to the third AP; and
sending, by the first AP, second session migration information to the third AP, wherein the second session migration information comprises a session parameter used when the second terminal performs data exchange with the first AP.

6. A terminal roaming method, applied to a wireless local area network, wherein the method comprises:
sending (1001), by a terminal, session migration information to a roaming target access point, AP, wherein the session migration information comprises a session parameter used when the terminal performs data exchange with an original associated AP of the terminal.

7. The method according to claim 6 wherein the session migration information is in an authentication request and/or an association request.

8. The method according to claim 6, wherein the session migration information is in a session migration frame sent by the terminal after the terminal is associated with the roaming target AP, and the session migration frame comprises session parameters corresponding to a plurality of service priorities and/or session parameters corresponding to a plurality of service flows.

9. The method according to any one of claims 6 to 8, wherein the session migration information comprises a block acknowledgment session parameter and/or a target wake time session parameter.

10. The method according to any one of claims 6 to 9, wherein the method further comprises:
after the terminal is associated with the roaming target AP, continuing, by the terminal, the data exchange with the roaming target AP based on the session parameter.

11. A first access point, AP, in a wireless local area network, wherein the first AP is configured to implement the method according to any one of claims 1 to 5.

12. A terminal in a wireless local area network, wherein the terminal is configured to implement the method according to any one of claims 6 to 10.

13. A wireless local area network, comprising a terminal and a plurality of access points, AP, wherein the terminal is configured to perform the method according to any one of claims 6-10, and the AP is configured to perform the method according to any one of claims 1-5.

14. A computer program product, comprising a first set of instructions, which when executed by a processor of an access point, cause the access point to perform a method according to any one of claims 1-5; and/or a second set of instructions which when executed by a processor of a terminal, cause the terminal to perform a method according to any one of claims 6-10.

## Patentansprüche

1. Endgeräteroamingverfahren, das auf ein drahtloses lokales Netzwerk angewandt wird, wobei das Verfahren Folgendes umfasst:
Empfangen (801) von ersten Sitzungsmigrationsinformationen durch einen ersten Zugangspunkt (AP - Access Point) wobei die ersten Sitzungsmigrationsinformationen einen Sitzungsparameter umfassen, der verwendet wird, wenn ein erstes Endgerät einen Datenaustausch mit einem zweiten AP durchführt und der zweite AP ein ursprünglich zugeordneter AP des ersten Endgeräts ist; und
nachdem das erste Endgerät dem ersten AP zugeordnet wurde, Fortsetzen (802) des Datenaustauschs mit dem ersten Endgerät durch den ersten AP auf Grundlage des Sitzungsparameters;
wobei das Empfangen erster Sitzungsmigrationsinformationen durch einen ersten AP Folgendes umfasst:
Empfangen der ersten Sitzungsmigrationsinformationen vom ersten Endgerät durch den ersten AP.

2. Verfahren nach Anspruch 1, wobei die ersten Sitzungsmigrationsinformationen in einer Authentifizierungsanforderung und/oder einer Zuordnungsanforderung enthalten sind.

3. Verfahren nach Anspruch 1, wobei sich die ersten Sitzungsmigrationsinformationen in einem Sitzungsmigrationsrahmen befinden, der vom ersten Endgerät gesendet wird, nachdem das erste Endgerät dem ersten AP zugeordnet wurde, und der Sitzungsmigrationsrahmen Sitzungsparameter umfasst, die einer Vielzahl von Dienstprioritäten entsprechen, und/oder Sitzungsparameter, die einer Vielzahl von Dienstflüssen entsprechen.

4. Verfahren nach einem der Ansprüche 1 bis 3, wobei die ersten Sitzungsmigrationsinformationen einen Blockbestätigungssitzungsparameter und/oder einen Zielweckzeitsitzungsparameter umfassen.

5. Verfahren nach einem der Ansprüche 1 bis 4, wobei das Verfahren ferner Folgendes umfasst:
Empfangen eines Frames durch den ersten AP von einem zweiten Endgerät, das dem ersten AP zugeordnet ist, wobei der Frame eine Kennung eines dritten AP umfasst und angibt, dass das zweite Endgerät zum dritten AP roamen soll; und
Senden zweiter Sitzungsmigrationsinformationen durch den ersten AP an den dritten AP, wobei die zweiten Sitzungsmigrationsinformationen einen Sitzungsparameter umfassen, der verwendet wird, wenn das zweite Endgerät einen Datenaustausch mit dem ersten AP durchführt.

6. Endgeräteroamingverfahren, das auf ein drahtloses lokales Netzwerk angewandt wird, wobei das Verfahren Folgendes umfasst:
Senden (1001) von Sitzungsmigrationsinformationen durch ein Endgerät an einen Roaming-Zielzugangspunkt (AP), wobei die Sitzungsmigrationsinformationen einen Sitzungsparameter umfassen, der verwendet wird, wenn das Endgerät einen Datenaustausch mit einem ursprünglich zugeordneten AP des Endgeräts durchführt.

7. Verfahren nach Anspruch 6, wobei die Sitzungsmigrationsinformationen in einer Authentifizierungsanforderung und/oder einer Zuordnungsanforderung enthalten sind.

8. Verfahren nach Anspruch 6, wobei sich die Sitzungsmigrationsinformationen in einem Sitzungsmigrationsrahmen befinden, der vom Endgerät gesendet wird, nachdem das Endgerät dem Roaming-Ziel-AP zugeordnet wurde, und der Sitzungsmigrationsrahmen Sitzungsparameter umfasst, die einer Vielzahl von Dienstprioritäten entsprechen, und/oder Sitzungsparameter, die einer Vielzahl von Dienstflüssen entsprechen.

9. Verfahren nach einem der Ansprüche 6 bis 8, wobei die Sitzungsmigrationsinformationen einen Blockbestätigungssitzungsparameter und/oder einen Zielweckzeitsitzungsparameter umfassen.

10. Verfahren nach einem der Ansprüche 6 bis 9, wobei das Verfahren ferner Folgendes umfasst:
nachdem das Endgerät dem Roaming-Ziel-AP zugeordnet wurde, Fortsetzen des Datenaustausches mit dem Roaming-Ziel-AP durch das Endgerät auf Grundlage des Sitzungsparameters.

11. Erster Zugangspunkt (AP) in einem drahtlosen lokalen Netzwerk, wobei der erste AP dazu konfiguriert ist, das Verfahren nach einem der Ansprüche 1 bis 5 durchzuführen.

12. Endgerät in einem drahtlosen lokalen Netzwerk, wobei das Endgerät dazu konfiguriert ist, das Verfahren nach einem der Ansprüche 6 bis 10 durchzuführen.

13. Drahtloses lokales Netzwerk, das ein Endgerät und eine Vielzahl von Zugangspunkten (AP) umfasst, wobei das Endgerät dazu konfiguriert ist, das Verfahren nach einem der Ansprüche 6-10 auszuführen, und der AP dazu konfiguriert ist, das Verfahren nach einem der Ansprüche 1-5 auszuführen.

14. Computerprogrammprodukt, das einen ersten Satz von Anweisungen umfasst, die, wenn sie von einem Prozessor eines Zugangspunkts ausgeführt werden, den Zugangspunkt veranlassen, ein Verfahren nach einem der Ansprüche 1-5 auszuführen; und/oder einen zweiten Satz von Anweisungen, die, wenn sie von einem Prozessor eines Endgeräts ausgeführt werden, das Endgerät veranlassen, ein Verfahren nach einem der Ansprüche 6-10 auszuführen.

## Revendications

1. Procédé d'itinérance de terminal, appliqué à un réseau local sans fil, dans lequel le procédé comprend :
la réception (801), par un premier point d'accès, AP, de premières informations de migration de session, dans lequel les premières informations de migration de session comprennent un paramètre de session utilisé lorsqu'un premier terminal effectue un échange de données avec un deuxième AP, et le deuxième AP est un AP associé d'origine du premier terminal ; et
après que le premier terminal ait été associé au premier AP, la poursuite (802), par le premier AP, de l'échange de données avec le premier terminal sur la base du paramètre de session ;
dans lequel la réception, par un premier AP, de premières informations de migration de session comprend :
la réception, par le premier AP, des premières informations de migration de session provenant du premier terminal.

2. Procédé selon la revendication 1, dans lequel les premières informations de migration de session se trouvent dans une demande d'authentification et/ou une demande d'association.

3. Procédé selon la revendication 1, dans lequel les premières informations de migration de session se trouvent dans une trame de migration de session envoyée par le premier terminal après que le premier terminal est associé au premier AP, et la trame de migration de session comprend des paramètres de session correspondant à une pluralité de priorités de service et/ou de paramètres de session correspondant à une pluralité de flux de service.

4. Procédé selon l'une quelconque des revendications 1 à 3, dans lequel les premières informations de migration de session comprennent un paramètre de session d'accusé de réception de bloc et/ou un paramètre de session d'heure de réveil cible.

5. Procédé selon l'une quelconque des revendications 1 à 4, dans lequel le procédé comprend également :
la réception, par le premier AP, d'une trame provenant d'un second terminal associé au premier AP, dans lequel la trame comprend un identifiant d'un troisième AP, et la trame indique que le second terminal doit se déplacer vers le troisième AP ; et
l'envoi, par le premier AP, de secondes informations de migration de session au troisième AP, dans lequel les secondes informations de migration de session comprennent un paramètre de session utilisé lorsque le second terminal effectue un échange de données avec le premier AP.

6. Procédé d'itinérance de terminal, appliqué à un réseau local sans fil, dans lequel le procédé comprend :
l'envoi (1001), par un terminal, d'informations de migration de session à un point d'accès cible itinérant, AP, dans lequel les informations de migration de session comprennent un paramètre de session utilisé lorsque le terminal effectue un échange de données avec un AP associé d'origine du terminal.

7. Procédé selon la revendication 6 dans lequel les informations de migration de session se trouvent dans une demande d'authentification et/ou une demande d'association.

8. Procédé selon la revendication 6, dans lequel les informations de migration de session se trouvent dans une trame de migration de session envoyée par le terminal après que le terminal est associé à l'AP cible itinérant, et la trame de migration de session comprend des paramètres de session correspondant à une pluralité de priorités de service et/ou de paramètres de session correspondant à une pluralité de flux de service.

9. Procédé selon l'une quelconque des revendications 6 à 8, dans lequel les informations de migration de session comprennent un paramètre de session d'accusé de réception de bloc et/ou un paramètre de session d'heure de réveil cible.

10. Procédé selon l'une quelconque des revendications 6 à 9, dans lequel le procédé comprend également :
une fois le terminal associé à l'AP cible itinérant, le fait de poursuivre, par le terminal, l'échange de données avec l'AP cible itinérant sur la base du paramètre de session.

11. Premier point d'accès, AP, dans un réseau local sans fil, dans lequel le premier AP est configuré pour mettre en œuvre le procédé selon l'une quelconque des revendications 1 à 5.

12. Terminal dans un réseau local sans fil, dans lequel le terminal est configuré pour mettre en œuvre le procédé selon l'une quelconque des revendications 6 à 10.

13. Réseau local sans fil, comprenant un terminal et une pluralité de points d'accès, AP, dans lequel le terminal est configuré pour exécuter le procédé selon l'une quelconque des revendications 6 à 10, et l'AP est configuré pour exécuter le procédé selon l'une quelconque des revendications 1 à 5.

14. Produit de programme informatique, comprenant un premier ensemble d'instructions qui, lorsqu'elles sont exécutées par un processeur d'un point d'accès, amènent le point d'accès à exécuter un procédé selon l'une quelconque des revendications 1 à 5 ; et/ou un second ensemble d'instructions qui, lorsqu'elles sont exécutées par un processeur d'un terminal, amènent le terminal à exécuter un procédé selon l'une quelconque des revendications 6 à 10.
